# EUROPEAN PATENT SPECIFICATION

(11) **EP 3 308 927 B1**
(45) Date of publication and mention of the grant of the patent: **14.08.2019**
(21) Application number: 16193777.6
(22) Date of filing: 13.10.2016
(51) Int. Cl.: B29C 33/48, B29C 33/76, B29C 45/14

(54) **MOLDING CORE AND INJECTION MOLDED MEMBER WITH REDUCED NOTCH STRESS**
FORMKERN UND SPRITZGEGOSSENES ELEMENT MIT REDUZIERTER KERBSPANNUNG
MOULE DE NOYAU ET ÉLÉMENT MOULÉ PAR INJECTION À ENCOCHES À CONTRAINTES RÉDUITES

(43) Date of publication of application: 18.04.2018
(73) Proprietor: TE Connectivity Germany GmbH, 64625 Bensheim (DE)
(72) Inventor: Geissler, Philipp, 91596 Burk (DE); Brandt, Jochen, 73493 Stoedtlen (DE)
(74) Representative: Grünecker Patent- und Rechtsanwälte PartG mbB

(56) References cited:
- WO-A1-2015/144915
- DE-A1- 2 336 789

## Description

The invention relates to a molding core for the production of injection molded members comprising at least a first and a second outer surface portion, wherein the first outer surface portion is oriented essentially in a longitudinal direction and the second outer surface portion is oriented under an angle to the first outer surface portion, the molding core further comprising a transition surface portion between the first and second outer surface portion. The invention further relates to an injection molded member comprising at least one externally accessible opening with at least a first and a second inner surface portion, wherein the first inner surface portion is oriented essentially in a longitudinal direction and the second inner surface portion is oriented under an angle to the first inner surface portion, the injection molded member further comprising a transition surface portion between the first and the second inner surface portion. Injection molded members may comprise complex structures, for instance undercuts or openings oriented essentially under an angle to the opening direction of the molding die. Especially, openings oriented essentially parallel to the parting line require molding cores that may be inserted into the molding chamber. In general, molding cores are embodied as longitudinal structures that may comprise steps and/or shoulders, see DE 2336 789 or WO 2015 144 915.

During injection molding, the polymer flows around the molding core, hardens and shrinks during the hardening process.

The molding cores are subsequently removed from the injection molded member, wherein large pulling forces may be necessary in order to remove the molding core from the shrunk polymer surrounding it.

During the extraction of the molding cores from the injection molded member, breakage of molding cores may occur.

The present invention therefore provides a molding core and an injection molded member which overcome the above-mentioned problem.

The molding core solves the problem by providing a transition contour of the transition surface portion which comprises at least three regions of a different curvature. Such a transition contour has the advantage that tensile load exerted to the molding core during the extraction from the hardened and shrunk injection molded member may be uniformly distributed within the material of the molding core. Therefore, the tensile stress occurring in the molding core may be redistributed. Especially at a step or shoulder, stress concentration may occur as the density of internal force lines increases. Therefore, holes or notches like steps or shoulders are also called stress raisers. The inventive molding core reduces the tensile stress and subsequently allows for higher tensile forces to be applied to the molding core. Furthermore, the inventive transition contour increases the possible number of load cycles before a failure of the molding core occurs. Additionally, due to preventing sharp edges at the step or shoulder, the inventive molding core may furthermore save material.

The inventive injection molded member of the aforementioned type solves the above problems by also providing a transition contour of the transition surface portion which comprises at least three regions of a different curvature.

The transition contour of the transition surface of either the molding core or the injection molded member may comprise a finite number of regions of a different curvature. Said number may be a discrete number below 10, preferentially four.

The molding core may be understood as the structure which is received within a molding die during the process of injection molding and which is surrounded by the injected material, in general a polymer. The molding core therefore remains in the at least one externally accessible opening in the injection molded member after the process of injection molding. After hardening and shrinkage of the injected material, the molding core is extracted from the injection molded member, wherein the molding core may in particular comprise longitudinal structures for forming openings or through holes in the injection molded member.

The structure of the molding core may therefore be understood as being complementary to the structure of the at least one externally accessible opening within the injection molded member. The transition contour of the transition surface portion of the molding core thus generates the transition contour of the transition surface portion in the injection molded member.

The first outer surface portion and the second outer surface portion of the molding core may be oriented at an angle larger than 90° to each other. However, both outer surface portions may also be oriented essentially perpendicular to each other.

Accordingly, the first and second inner surface portion of the injection molded member may also be oriented at an angle below 90° or may essentially be perpendicularly oriented to each other.

The transition contour of the molding core may be embodied at a longitudinal structure of the molding core extending along the longitudinal direction.

Accordingly, the at least one externally accessible opening of the injection molded member may extend along the longitudinal direction.

In the following, further possible embodiments of the present invention will be described, wherein each possible embodiment is advantageous on its own and technical features of the embodiment may be arbitrarily combined with each other.

The inventive molding core of another embodiment comprises a third outer surface portion which extends under a second angle at least to the second outer surface portion, wherein a second transition surface portion is comprised between the second outer surface portion and the third outer surface portion. The second transition surface portion has the advantage of a reduced tensile stress in the connection area between the second outer surface portion and the third outer surface portion. The second transition surface portion may be embodied similarly to the transition surface portion in terms of curvature and/or the number of regions of different curvature. In particular, a second transition contour of the second transition surface portion may comprise at least three regions of different curvature.

Accordingly, the injection molded member may also comprise a third inner surface portion extending under a second angle at least to the second inner surface portion, wherein a second transition surface portion is comprised between the second inner surface portion and the third inner surface portion. The second transition surface portion of the injection molded member is therefore generated by over molding the second transition surface portion of the molding core. The injection molded member may, in particular, comprise a second transition surface portion with a second transition contour, which contour may comprise at least three regions of different curvature.

The second outer surface portion of the molding core, respectively the second inner surface portion of the injection molded member, may linearly extend under a first angle to the corresponding first outer or inner surface portion and under a second angle to the corresponding third outer or inner surface portion.

The third outer surface portion of the molding core, respectively the third inner surface portion of the injection molded member may be oriented in an angle above 90° or essentially perpendicular to the corresponding second outer or inner surface portion.

The second outer surface portion of the molding core, respectively the second inner surface portion of the injection molded member, may in particular be essentially perpendicular to the first and third outer, respectively inner surface portion of the molding core, respectively the injection molded member. Hence, the first and third outer surface portion of the molding core, respectively the first and third inner surface portion of the injection molded member may be essentially parallel to each other.

In another embodiment of the inventive molding core or the inventive injection molded member, the transition surface portion and the second transition surface portion have opposite directions of curvature. The opposite direction of curvature of the transition surface portion and the second transition surface portion may therefore describe a contour having a concave and a convex section. The curvatures of the transition surface portion and the second transition surface portion may be inverted to each other. That is, the curvatures may have the same amount of curvature and differ solely in the sign of the curvature.

The outer contour of the inventive molding core, respectively the inner contour of the inventive injection molded member, may therefore be similar to an S-shape and may represent a step or shoulder with stress reducing geometry.

In another embodiment of the inventive molding core, the first and second outer surface portion and/or the second and third outer surface portion merge into the corresponding embedded transition surface portion in a continuous manner.

Accordingly, in another embodiment of the injection molded member, the first and second inner surface portion and/or the second and third inner surface portion merge into the corresponding embedded transition surface portion in a continuous manner.

Especially at points of discontinuity, an increase of notch stress is observed. Those points of discontinuity may represent the region of highest tensile stress and consequently the region with the highest probability for the generation of cracks and/or fracture, from which damage to the molding core or the injection molded member may begin to spread throughout the whole molding core or injection molded member.

Therefore, avoiding points of discontinuity by merging the first and second surface portion and/or the second and third surface portion into the corresponding embedded transition surface portion in a continuous manner avoids non-uniform tensile stress in the molding core or the injection molded member which in turn increases the service life of those elements.

In other embodiments of the inventive molding core or injection molded member, the transition surface portion may directly merge into the second transition surface portion, such that the second outer surface portion or the second inner surface portion are solely a corresponding saddle point between the opposite curved transition surface portion and second transition surface portion.

In another embodiment of the inventive molding core, respectively the inventive injection molded member, the at least three regions of different curvature merge into each other in a continuous manner. The avoidance of points of discontinuity in the contour of the transition surface portion or the second and/or the second transition surface portion avoids, as described above, an increase of notch stress by a continuous redistribution of the tensile force.

In another advantageous embodiment, the at least three regions of different curvature are segments of a circle. Segments of a circle may be easily defined by a radius and are readily implemented in fabrication devices with computer numerical control (CNC).

The segments of a circle may be defined by radii, wherein each segment may be defined by a different radius.

Two adjacent segments of a circle may comprise a common tangential line in their connection point such that one segment of a circle merges continuously into the adjacent segment of the second circle of a different radius.

Along the contour of the transition surface portion or the second transition surface portion, the radii of subsequent adjacent segments may either increase or decrease. The radii of the at least three regions of different curvature may thus increase from the second outer surface portion towards the first outer surface portion, respectively decrease in this direction. The same applies to the contour of the transition surface portion or the second transition surface portion of the injection molded member.

In yet another advantageous embodiment of the molding core, respectively the injection molded member, the transition surface portion is constructed by the tensile triangle method. The tensile triangle method has the advantage that it is a purely graphical method which does not require application of the finite elements method (FEM).

Preferentially, the transition surface portion and/or of the second transition surface portion is/are geometrically constructed by the tensile triangle method and subsequently rounded in order to avoid points of discontinuity which renders the distribution of tensile load homogeneous.

The tensile triangle method applies a set of tensile triangles and starts with a first tensile triangle based on which a second tensile triangle may be constructed, wherein a third tensile triangle is constructed based on the second tensile triangle. In general the tensile triangle method applies three iteration steps as the gain in tensile stress reduction applying a fourth iteration step is marginal with respect to the increase of constructional effort.

The tensile triangle method may be performed using two iteration steps, during which two tensile triangles that are subsequently rounded into three regions of different curvature, are constructed. A different curvature may be understood as a different radius of the segment of the circle. Consequently, a number of N iterations in the applied tensile triangle method results in a number of N+1 regions of different curvature after rounding.

If the first and second outer, respectively inner, surface portion of the molding core or injection molded member are essentially perpendicularly oriented to each other, the first tensile triangle may be an equal-sided triangle with a right angle between the first and second outer respectively inner surface portion. A second tensile triangle may be constructed from the center of the hypotenuse of the first tensile triangle, whereas a distance from one end of the hypotenuse to the center of the hypotenuse is drawn to the according outer or inner surface portion such that an obtuse angled second tensile triangle is obtained. The third tensile triangle may be constructed accordingly. Consequently, the hypotenuses of the different tensile triangles, more particularly their linear sections or slope, approach the according outer or inner surface portion.

The tensile triangles may form a transition contour comprising as much different linear sections as iteration steps applied.

On each of the linear sections a perpendicular located in the center of the corresponding section, may be constructed, wherein two such perpendiculars being located adjacent to a point of discontinuity formed by two adjacent linear sections intersect each other at an intersection point. This intersection point corresponds to the center of the circular segment applied for rounding.

For rounding at the first, second or third inner or outer surface portion, a distance between the corner of the according tensile triangle and the center of the corresponding linear section is drawn to the first, second or third inner or outer surface portion whereupon a further perpendicular is constructed.

The transition contour of the molding core or the injection molded member is described as a one dimensional structure, wherein said transition contour may be adapted to a two or three-dimensional structure, for instance in the case of a rotational symmetry of a molding core or injection molded member.

In the following, the present invention is explained in greater detail on the basis of the accompanying drawings. For the sake of simplicity, the same technical features and technical features having the same technical effect are provided with the same reference numeral.

Technical features of the embodiment may be arbitrarily combined or omitted if the technical effect obtained with the omitted technical feature is not relevant to the invention.

The drawings show:
- FIG. 1: two identical molding cores with longitudinal portions;
- FIG. 2: a detail of an inventive molding core shown in a first embodiment;
- FIG. 3: a detail of an inventive molding core shown in a second embodiment; and
- FIG. 4: a detail of an inventive injection molding injection molded member.

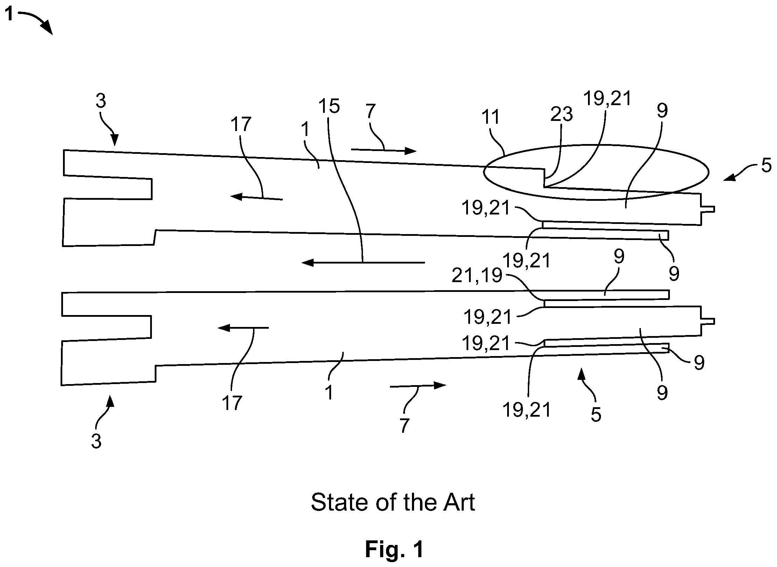

In FIG. 1, two exemplary molding cores 1 are shown. The molding cores 1 comprise a fixation section 3 for fixing the corresponding molding core 1 to the molding die (not shown) and an insertion section 5 for being inserted into the molding chamber formed by the molding die (not shown). Both molding cores 1 extend along a longitudinal direction 7. In the embodiment shown, the molding cores 1 comprise three longitudinal portions 9, whereas one of the longitudinal portions 9 of the upper molding core 1 is broken which is indicated by a highlighting ellipse 11. Molding cores 1 may comprise any number of longitudional portions 9 of different shape.

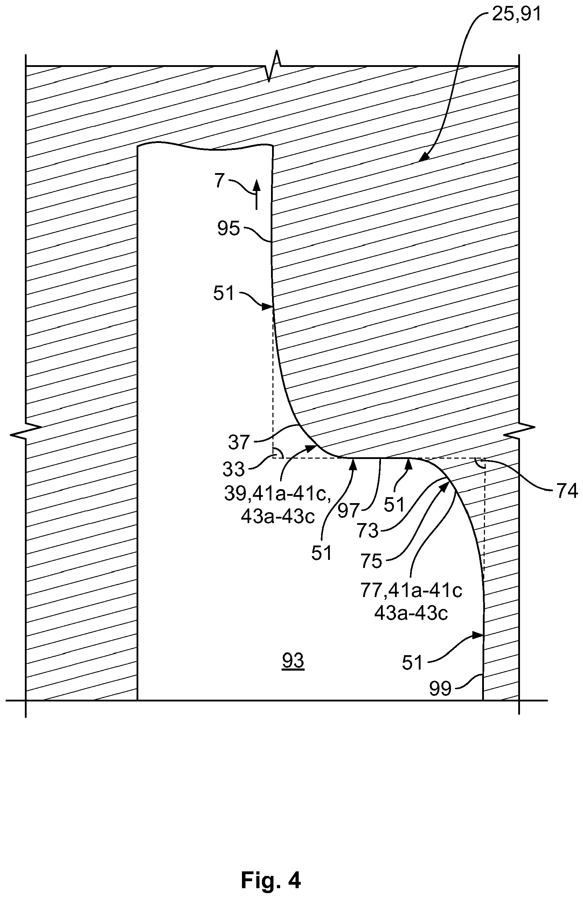

During extraction of the molding cores 1 after injection molding of an injection molded member 91 (see FIG. 4), the molding core 1 is extracted in an extraction direction 15 being basically opposite to the longitudinal direction 7.

Extraction of the corresponding molding core 1 along the extraction direction 15 results in a tensile force 17 exerted on the molding core 1 in extraction direction 15.

As the longitudinal portions 9 of the molding cores 1 comprise sharp corners 19, which may be understood as geometric discontinuities 21, said corners 19 show an increased tensile stress (not shown) and may be the origin of damage 23 which led to breaking of one longitudinal portion 9 as shown in the upper molding core 1 of FIG. 1. In general, a sharp corner has to be understood as being not intentionally rounded with a predetermined radius. A sharp corner therefore also describes corners with manufacturing radi occurring in the fabrication process.

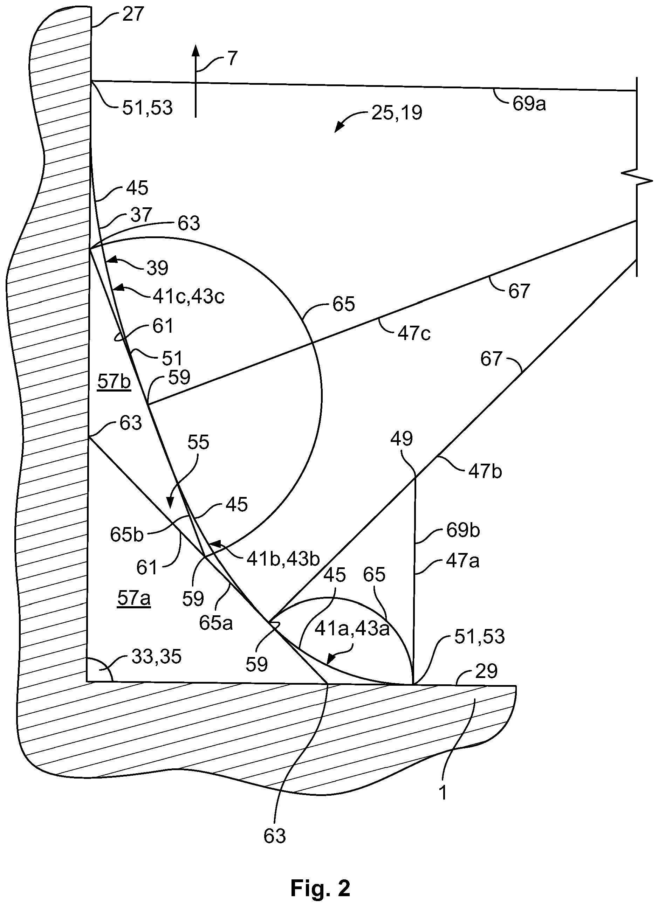

FIG. 2 shows a detail 25 of a first embodiment of the inventive molding core 1.

The detail 25 may be for instance located in the area of one of the corners 19 of the molding core 1 of FIG. 1, in particular the origin of damage 23.

The corner shown in FIG. 2 comprises a first outer surface 27 and a second outer surface 29, wherein the first outer surface 27 extends along the longitudinal direction 7.

The first and second outer surfaces 27, 29 are oriented under an angle 33, which is a right angle 35 in the embodiment shown in FIG. 2.

Between the first and second outer surfaces 27, 29 a transition surface 37 is comprised which has a transition contour 39. The inventive molding cores 1 comprise the transition contour 39, whereas a molding core 1 of the art may comprise the right angle 35.

The transition contour 39 of the transition surface portion 37 comprises three regions 41 each of which has a different curvature 43. As the three regions 41 of different curvature 43 are segments of a circle 45, each curvature 43 is defined by a radius 47. In the embodiment shown in FIG. 2, the first region 41a is therefore defined by the first radius 47a and has a first curvature 43a, a second region 41b comprises the second curvature 43b and is defined by a second radius 47b, which is indicated in FIG. 2.

Finally, the third region 41c has a third curvature 43c and is defined by a third radius 47c. The radii 47 increase from radius 47a to radius 47c.

A center of the circle 49 is only shown for the first region 41a as the centers of the circle 49 for the second and third region 41b, 41c lie outside of the drawn detail 25 of the molding core 1.

The regions of different curvature 41a-41c merge into each other such that the transition surface portion 37 evolves in a continuous manner 51. Also, in the surface portion connection points 53, a transition from the transition surface portion 37 to the first or second outer surface portion 27, 29 occurs in a continuous manner 51.

The transition contour 39 shown in FIG. 2 is constructed via the tensile triangle method 55 which is based on a first tensile triangle 57a constructed between the first and second outer surface portions 27, 29, wherein a second tensile triangle 57b is constructed by means of a center position 59 of the first tensile triangles 57a hypotenuse 61. The distance between the center position 59 and a triangle corner 63 is drawn in a circle 65 such that a further triangle corner 63 of a second tensile triangle 57b is obtained.

The tensile triangles 57a, 57b form a first and a second linear section 65a, 65b, on whose center positions 59 a perpendicular 67 is constructed.

Close to the first or second outer surface portion 27, 29 the distance between the triangle corner 63 and the center position 59 on which a perpendicular 67 is constructed, is transferred via a circle 65 onto the first or second outer surface portion 27, 29, which is shown for the second outer surface portion 29 in FIG. 2. A second outer surface perpendicular 69b intercepts the perpendicular 67, wherein the interception point defines the center of the circle 49 of the first curvature 43a.

Accordingly, a first surface outer perpendicular 69a intercepts the according perpendicular 67 constructed on the hypotenuse 61 of the second tensile triangle 57b. The interception point, however, is outside of the detail 25 shown in FIG. 2 and therefore not drawn in the figure.

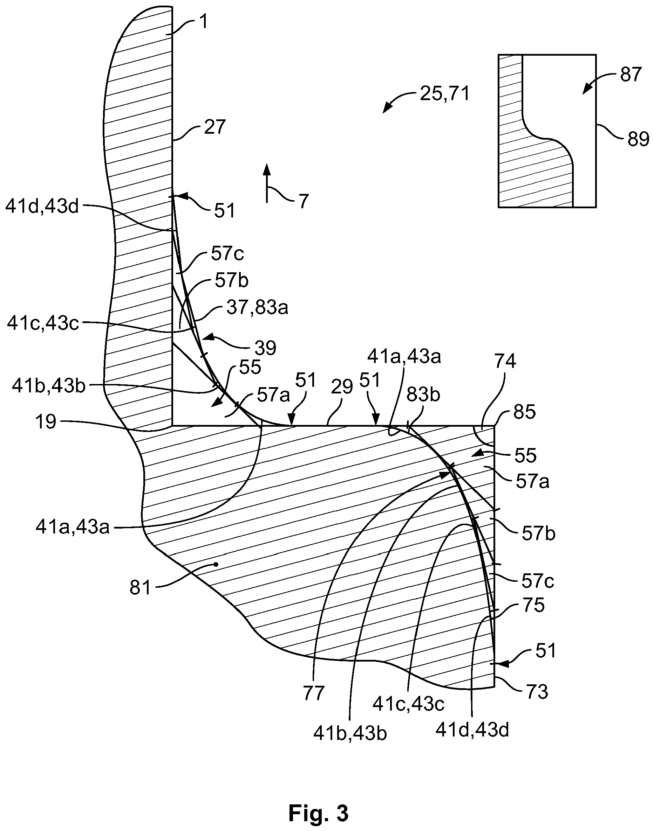

FIG. 3 shows a detail 25 of the inventive molding core 1, wherein the second embodiment shown comprises a shoulder 71.

The shoulder 71 comprises the first outer surface portion 27, the second outer surface portion 29 and a third outer surface portion 73, wherein in the embodiment shown in FIG. 3, the first and third outer surface portion 27, 73 extend essentially along the longitudinal direction 7, i.e., the first and third outer surface portion 27, 73 are essentially parallel to each other. The third outer surface portion 73 is oriented under a second angle 74 to the second outer surface portion 29. In the embodiment shown in FIG. 3, the third outer surface portion 73 is oriented essentially perpendicular to the second outer surface portion 29.

Between the first and second outer surface portion 27, 29, the transition surface portion 37 is embodied such that the transition contour 39 merges into the first and second outer surface portion 27, 29 in a continuous manner 51.

Between the second outer surface portion 29 and the third outer surface portion 73, a second transition surface portion 75 is embodied, wherein the second transition surface portion 75 comprises a second transition contour 77 which also emerges in a continuous manner 51 into the second and third outer surface portion 29, 73.

The transition contour 39 and the second transition contour 77 are constructed by the tensile triangle method 55, wherein three steps of iteration, that is, three tensile triangles 57a, 57b and 57c are applied.

As the transition surface portion 37 and the second transition surface portion 75 are constructed by three tensile triangles 57a-57c, said transition surface portions 37, 75 comprise a fourth region 41d with a fourth curvature 43d which is consequently defined by a fourth radius 47d.

The transition contour 39 and the second transition contour 77, and consequently the transition surface portion 37 and the second transition surface portion 75, show opposite directions of curvature 79. Following a mathematical definition and considering a reference point 81 located inside the molding core 1, the transition surface portion 37 has a concave curvature 83a and the second transition surface portion 75 has a convex curvature 83b.

It is to be noted that the corners 19 of the shoulder 71 are solely drawn for explanation of the tensile triangle method 55 and accordingly, the inventive molding core 1 will contain material between the transition contour 39 and the corner 19, whereas in between the second transition contour 77 and the sharp edge 85 material will be removed from the molding core 1. In general, the final shape 87 as shown in box 89 will be directly produced, for instance by CNC techniques, wherein the shape will be constructed prior to production.

FIG. 4 shows a detail 25 of the inventive injection molded member 91 comprising an externally accessible opening 93 which comprises a first inner surface portion 95, a second inner surface portion 97 and a third inner surface portion 99, wherein the first inner surface portion 95 is oriented essentially along the longitudinal direction 7 and essentially parallel to the third inner surface portion 99.The second inner surface portion 97 is essentially perpendicular to the first inner surface portions 95, 99.

Between the first and second inner surface portion 95, 97, the transition surface portion 37 is located, which transition surface portion 37 comprises the transition contour 39 which comprises at least three regions 41a-41c of different curvature 43.

As the construction of the transition surface portion 37 of the injection molding member 91 is performed in an analog manner to the transition surface portion 37 of the molding core 1 of FIG. 2 or FIG. 3, it is resigned to draw the tensile triangles 57a-57c or the different regions 41a-41d with different curvatures 43a-43d.

Analogous to the molding core 1 shown in FIG. 3, the second transition surface portion 75 of the injection molded member 91 is located in between the second and third inner surface portions 97, 99 and comprises the second transition contour 77 having at least three regions 41a-41c of different curvatures 43a-43c.

The transition surface portion 37 as well as the second transition surface portion 75, merges into the adjacent inner surface portions 95, 97, 99 in a continuous manner 51.

### REFERENCE SIGNS

- 1.: Molding core
- 3.: Fixation section
- 5.: Insertion section
- 7.: Longitudinal direction
- 9.: Longitudinal portion
- 11.: Highlighting ellipse
- 15.: Extraction direction
- 17.: Tensile force
- 19.: Corner
- 21.: Geometric discontinuity
- 23.: Origin of damage
- 25.: Detail
- 27.: First outer surface portion
- 29.: Second outer surface portion
- 31.: Third outer surface portion
- 33.: Angle
- 35.: Right angle
- 37.: Transition surface portion
- 39.: Transition contour
- 41.: Region
- 43.: Curvature
- 41a.: First region
- 41b.: Second region
- 41c.: Third region
- 41d.: Fourth region
- 43a.: First curvature
- 43b: Second curvature
- 43c.: Third curvature
- 43d.: Fourth curvature
- 45.: Segment of a circle
- 47.: Radius
- 47a.: First radius
- 47b.: Second radius
- 47c.: Third radius
- 47d.: Fourth radius
- 49.: Center of the circle
- 51.: Continuous manner
- 53.: Surface portion connection point
- 55.: Tensile triangle method
- 57a.: First tensile triangle
- 57b.: Second tensile triangle
- 57c.: Third tensile triangle
- 59.: Center position
- 61.: Hypotenuse
- 63.: Triangle corner
- 65a.: First linear section
- 65b.: Second linear section
- 67.: Perpendicular
- 69a.: First surface outer perpendicular
- 69b.: Second surface outer perpendicular
- 71.: Shoulder
- 73.: Third outer surface portion
- 74.: Second angle
- 75.: Second transition surface portion
- 77.: Second transition contour
- 79.: Direction of curvature
- 81.: Reference point
- 83a.: Concave curvature
- 83b.: Convex curvature
- 85.: Sharp edge
- 87.: Final shape
- 89.: Box
- 91.: Injection molded member
- 93.: Externally accessible opening
- 95.: First inner surface portion
- 97.: Second inner surface portion
- 99.: Third inner surface portion

## Claims

1. Molding core (1) for the production of injection molded members (91), comprising at least a first (27) and a second outer surface portion (29), wherein the first outer surface portion (27) is oriented essentially in a longitudinal direction (7) and the second outer surface portion (29) is oriented under an angle (33) to the first outer surface portion (27), the molding core (1) further comprising a transition surface portion (37) between the first (27) and second outer surface portion (29), **characterized in that** a transition contour (39) of the transition surface portion (37) comprises at least three regions (41a-41c) of different curvature (43).

2. Molding core (1) according to claim 1, **characterized in that** a third outer surface portion (73) extending under a second angle (74) at least to the second outer surface portion (29) is comprised and that a second transition surface portion (75) is comprised between the second outer surface portion (29) and the third outer surface portion (73), wherein a second transition contour (77) of the second transition surface portion (75) comprises at least three regions (41a-41c) of different curvature (43).

3. Molding core (1) according to claim 2, **characterized in that** the transition surface portion (37) and the second transition surface portion (75) have opposite directions of curvature (79).

4. Molding core (1) according to any one of claims 1 to 3, **characterized in that** the first (27) and second outer surface portion (29) and/or the second (29) and third outer surface portion (73) merge into the corresponding embedded transition surface portion (37,75) in a continuous manner (51).

5. Molding core (1) according to any one of claims 1 to 4, **characterized in that** the at least three regions (41a-41c) of different curvature (43) merge into each other in a continuous manner (51).

6. Molding core (1) according to any one of claims 1 to 5, **characterized in that** the at least three regions (41a-41c) of different curvature (43) are segments of a circle (45).

7. Molding core (1) according to any one of claims 1 to 6, **characterized in that** the transition surface portion (37) and/or the second transition surface portion (75) is constructed by the tensile triangle method (55).

8. Injection molded member (91) comprising at least one externally accessible opening (93) with at least a first (95) and a second inner surface portion (97), wherein the first inner surface portion (95) is oriented essentially in a longitudinal direction (7) and the second inner surface portion (97) is oriented under an angle (33) to the first inner surface portion (95), the injection molded member (91) further comprising a transition surface portion (37) between the first (95) and second inner surface portion (97), **characterized in that** a transition contour (39) of the transition surface portion (37) comprises at least three regions (41a-41c) of different curvature (43).

9. Injection molded member (91) according to claim 8, **characterized in that** a third inner surface portion (99) extending under a second angle (74) at least to the second inner surface portion (97) is comprised and that a second transition surface portion (75) is comprised between the second inner surface portion (97) and the third inner surface portion (99), wherein a second transition contour (77) of the second transition surface portion (75) comprises at least three regions (41a-41c) of different curvature (43).

10. Injection molded member (91) according to claim 9, **characterized in that** the transition surface portion (37) and the second transition surface portion (75) have opposite directions of curvature (79).

11. Injection molded member (91) according to any one of claims 8 to 10, **characterized in that** the first (95) and second inner surface portion (97) and/or the second (97) and third inner surface portion (99) merge into the corresponding embedded transition surface portion (37,75) in a continuous manner (51).

12. Injection molded member (91) according to any one of claims 8 to 11, **characterized in that** the at least three regions (41a-41c) of different curvature (43) merge into each other in a continuous manner (51).

13. Injection molded member (91) according to any one of claims 8 to 12, **characterized in that** the at least three regions (41a-41c) of different curvature (43) are segments of a circle (45).

14. Injection molded member (91) according to any one of claims 8 to 13, **characterized in that** the transition surface portion (37) and/or the second transition surface portion (75) is constructed by the tensile triangle method (55).

## Patentansprüche

1. Formkern (1) für die Herstellung von Spritzgussteilen (91), der wenigstens einen ersten (27) und einen zweiten Außenflächen-Abschnitt (29) umfasst, wobei der erste Außenflächen-Abschnitt (27) im Wesentlichen in einer Längsrichtung (7) ausgerichtet ist und der zweite Außenflächen-Abschnitt (29) in einem Winkel (33) zu dem ersten Außenflächen-Abschnitt (27) ausgerichtet ist, und der Formkern (1) des Weiteren einen Übergangsflächen-Abschnitt (37) zwischen dem ersten (27) und dem zweiten Außenflächen-Abschnitt (29) umfasst, **dadurch gekennzeichnet, dass** eine Übergangskontur (39) des Übergangsflächen-Abschnitts (37) wenigstens drei Bereiche (41a-41c) unterschiedlicher Krümmung (43) umfasst.

2. Formkern (1) nach Anspruch 1, **dadurch gekennzeichnet, dass** ein dritter Außenflächen-Abschnitt (73), der sich in einem zweiten Winkel (74) wenigstens zu dem zweiten Außenflächen-Abschnitt (29) erstreckt, eingeschlossen ist und dass ein zweiter Übergangsflächen-Abschnitt (75) zwischen dem zweiten Außenflächen-Abschnitt (29) und dem dritten Außenflächen-Abschnitt (73) eingeschlossen ist, wobei eine zweite Übergangskontur (77) des zweiten Übergangsflächen-Abschnitts (75) wenigstens drei Bereiche (41a-41c) unterschiedlicher Krümmung (43) umfasst.

3. Formkern (1) nach Anspruch 2, **dadurch gekennzeichnet, dass** der Übergangsflächen-Abschnitt (37) und der zweite Übergangsflächen-Abschnitt (75) entgegengesetzte Krümmungsrichtungen (79) haben.

4. Formkern (1) nach einem der Ansprüche 1 bis 3, **dadurch gekennzeichnet, dass** der erste (27) und der zweite Außenflächen-Abschnitt (29) und/oder der zweite (29) und der dritte Außenflächen-Abschnitt (73) zusammenhängend (51) in den entsprechenden eingebetteten Übergangsflächen-Abschnitt (37, 75) übergehen.

5. Formkern (1) nach einem der Ansprüche 1 bis 4, **dadurch gekennzeichnet, dass** die wenigstens drei Bereiche (41a-41c) unterschiedlicher Krümmung (43) zusammenhängend (51) ineinander übergehen.

6. Formkern (1) nach einem der Ansprüche 1 bis 5, **dadurch gekennzeichnet, dass** die wenigstens drei Bereiche (41a-41c) unterschiedlicher Krümmung (43) Segmente eines Kreises (45) sind.

7. Formkern (1) nach einem der Ansprüche 1 bis 6, **dadurch gekennzeichnet, dass** der Übergangsflächen-Abschnitt (37) und/oder der zweite Übergangsflächen-Abschnitt (75) mittels der Methode der Zugdreiecke (55) konstruiert werden/wird.

8. Spritzgussteil (91), das wenigstens eine von außen zugängliche Öffnung (93) mit wenigstens einem ersten (95) und einem zweiten Innenflächen-Abschnitt (97) umfasst, wobei der erste Innenflächen-Abschnitt (95) im Wesentlichen in einer Längsrichtung (7) ausgerichtet ist und der zweite Innenflächen-Abschnitt (97) in einem Winkel (33) zu dem ersten Innenflächen-Abschnitt (95) ausgerichtet ist, und das Spritzgussteil (91) des Weiteren einen Übergangsflächen-Abschnitt (37) zwischen dem ersten (95) und dem zweiten Innenflächen-Abschnitt (97) umfasst, **dadurch gekennzeichnet, dass** eine Übergangskontur (39) des Übergangsflächen-Abschnitts (37) wenigstens drei Bereiche (41a-41c) unterschiedlicher Krümmung (43) umfasst.

9. Spritzgussteil (91) nach Anspruch 8, **dadurch gekennzeichnet, dass** ein dritter Innenflächen-Abschnitt (99), der sich in einem zweiten Winkel (74) wenigstens zu dem zweiten Innenflächen-Abschnitt (97) erstreckt, eingeschlossen ist und dass ein zweiter Übergangsflächen-Abschnitt (75) zwischen dem zweiten Innenflächen-Abschnitt (97) und dem dritten Innenflächen-Abschnitt (99) eingeschlossen ist, wobei eine zweite Übergangskontur (77) des zweiten Übergangsflächen-Abschnitts (75) wenigstens drei Bereiche (41a-41c) unterschiedlicher Krümmung (43) umfasst.

10. Spritzgussteil (91) nach Anspruch 9, **dadurch gekennzeichnet, dass** der Übergangsflächen-Abschnitt (37) und der zweite Übergangsflächen-Abschnitt (75) entgegengesetzte Krümmungsrichtungen (79) haben.

11. Spritzgussteil (91) nach einem der Ansprüche 8 bis 10, **dadurch gekennzeichnet, dass** der erste (95) und der zweite Innenflächen-Abschnitt (97) und/oder der zweite (97) und der dritte Außenflächen-Abschnitt (99) zusammenhängend (51) in den entsprechenden eingebetteten Übergangsflächen-Abschnitt (37, 75) übergehen.

12. Spritzgussteil (91) nach einem der Ansprüche 8 bis 11, **dadurch gekennzeichnet, dass** die wenigstens drei Bereiche (41a-41c) unterschiedlicher Krümmung (43) zusammenhängend (51) ineinander übergehen.

13. Spritzgussteil (91) nach einem der Ansprüche 8 bis 12, **dadurch gekennzeichnet, dass** die wenigstens drei Bereiche (41a-41c) unterschiedlicher Krümmung (43) Segmente eines Kreises (45) sind.

14. Spritzgussteil (91) nach einem der Ansprüche 8 bis 13, **dadurch gekennzeichnet, dass** der Übergangsflächen-Abschnitt (37) und/oder der zweite Übergangsflächen-Abschnitt (75) mittels der Methode der Zugdreiecke (55) konstruiert werden/wird.

## Revendications

1. Noyau de moulage (1) destiné à la fabrication d'éléments moulés par injection (91) comprenant au moins une première (27) et une deuxième (29) partie de surface externe, la première partie de surface externe (27) étant orientée globalement dans la direction longitudinale (7) et la deuxième partie de surface externe (29) étant orientée selon un angle (33) par rapport à la première partie de surface externe (27), le noyau de moulage (1) comprenant en outre une partie de surface de transition (37) entre la première (27) et la deuxième (29) partie de surface externe, **caractérisé en ce que** le contour de transition (39) de la partie de surface de transition (37) comprend au moins trois zones (41a à 41c) de courbure (43) différente.

2. Noyau de moulage (1) selon la revendication 1, **caractérisé en ce qu'**est comprise une troisième partie de surface externe (73) s'étendant selon un second angle (74) au moins par rapport à la deuxième partie de surface externe (29), et **en ce qu'**une seconde partie de surface de transition (75) est comprise entre la deuxième partie de surface externe (29) et la troisième partie de surface externe (73), un second contour de transition (77) de la seconde partie de surface de transition (75) comprenant au moins trois zones (41a à 41c) de courbure (43) différente.

3. Noyau de moulage (1) selon la revendication 2, **caractérisé en ce que** la partie de surface de transition (37) et la seconde partie de surface de transition (75) présentent des directions opposées de courbure (79).

4. Noyau de moulage (1) selon l'une quelconque des revendications 1 à 3, **caractérisé en ce que** la première (27) et la deuxième (29) partie de surface externe, et/ou **en ce que** la deuxième (29) et la troisième (73) partie de surface externe fusionnent de façon continue (51) dans la partie de surface de transition (37, 75) intégrée correspondante.

5. Noyau de moulage (1) selon l'une quelconque des revendications 1 à 4, **caractérisé en ce que** les trois zones (41a à 41c) de courbure (43) différente ou plus fusionnent de façon continue (51) l'une dans l'autre.

6. Noyau de moulage (1) selon l'une quelconque des revendications 1 à 5, **caractérisé en ce que** les trois zones (41a à 41c) de courbure (43) différente ou plus sont les segments d'un cercle (45).

7. Noyau de moulage (1) selon l'une quelconque des revendications 1 à 6, **caractérisé en ce que** la partie de surface de transition (37) et/ou la seconde partie de surface de transition (75) sont construites par la méthode des triangles extensibles (55) (tensile triangle method).

8. Élément moulé par injection (91) comprenant au moins une ouverture (93) accessible de l'extérieur avec au moins une première (95) et une seconde (97) partie de surface interne, la première partie de surface interne (95) étant orientée globalement dans la direction longitudinale (7) et la seconde partie de surface interne (97) étant orientée selon un angle (33) par rapport à la première partie de surface interne (95), l'élément moulé par injection (91) comprenant en outre un partie de surface de transition (37) entre la première (95) et la seconde (97) partie de surface interne, **caractérisé en ce que** le contour de transition (39) de la partie de surface de transition (37) comprend au moins trois zones (41a à 41c) de courbure (43) différente.

9. Élément moulé par injection (91) selon la revendication 8, **caractérisé en ce qu'**est comprise une troisième partie de surface externe (99) s'étendant selon un second angle (74) au moins par rapport à la deuxième partie de surface externe (97), et **en ce qu'**une seconde partie de surface de transition (75) est comprise entre la deuxième partie de surface externe (97) et la troisième partie de surface externe (99), un second contour de transition (77) de la seconde partie de surface de transition (75) comprenant au moins trois zones (41a à 41c) de courbure (43) différente.

10. Élément moulé par injection (91) selon la revendication 9, **caractérisé en ce que** la partie de surface de transition (37) et la seconde partie de surface de transition (75) présentent des directions opposées de courbure (79).

11. Élément moulé par injection (91) selon l'une quelconque des revendications 8 à 10, **caractérisé en ce que** la première (95) et la seconde (97) partie de surface interne et/ou **en ce que** la seconde (97) et la troisième (99) partie de surface interne fusionnent de façon continue (51) dans la partie de surface de transition (37, 75) intégrée correspondante.

12. Élément moulé par injection (91) selon l'une quelconque des revendications 8 à 11, **caractérisé en ce que** les trois zones (41a à 41c) de courbure (43) différente ou plus fusionnent de façon continue (51) l'une dans l'autre.

13. Élément moulé par injection (91) selon l'une quelconque des revendications 8 à 12, **caractérisé en ce que** les trois zones (41a à 41c) de courbure (43) différente ou plus sont les segments d'un cercle (45).

14. Élément moulé par injection (91) selon l'une quelconque des revendications 8 à 13, **caractérisé en ce que** la partie de surface de transition (37) et/ou la seconde partie de surface de transition (75) sont construites par la méthode des triangles extensibles (55) (tensile triangle method).
